# EUROPÄISCHE PATENTANMELDUNG

(11) **EP 0 536 108 A1**
(43) Veröffentlichungstag der Anmeldung: **07.04.1993**
(21) Anmeldenummer: 92890206.3
(22) Anmeldetag: 28.09.1992
(51) Int. Cl.: C21D 9/22, C21D 9/00, F27D 5/00, H05B 6/40

(54) **Ofen zur partiellen Wärmebehandlung von Werkzeugen**

(30) Priorität: 02.10.1991 AT 1977/91
(71) Anmelder: Aichelin Industrieofenbau Ges.m.b.H., A-2340 Mödling/Wien (AT)
(72) Erfinder: Berger, Harald, A-2371 Hinterbrühl (AT)
(74) Vertreter: Rippel, Andreas, Dipl.-Ing.

(57) **Zusammenfassung**

In einem Ofen zur partiellen Wärmebehandlung von Werkzeugen (26), die einen Arbeits-und einen Einspannbereich aufweisen, wird der nicht der Wärmebehandlung zu unterziehende Bereich in einer für den Transport der Werkzeuge (26) durch den Ofen vorgesehenen Werkzeugaufnahme (W) während der Wärmebehandlung auf einem ausreichend tiefen Temperaturniveau gehalten.

Zur Wärmebehandlung des Arbeitsbereiches der Werkzeuge (26) in sauerstoffarmer Atmosphäre ist eine nur den Arbeitsbereich einschließende Induktionsspule (22 angeord-', 23') net und die Werkzeugaufnahme (W) besteht aus einem nicht magnetisierbaren Material.

Dadurch werden kurze Durchlaufzeiten der zu behandelnden Werkzeuge erreicht.

## Beschreibung

Die Erfindung bezieht sich auf einen Ofen zur partiellen Wärmebehandlung von Werkzeugen, die einenArbeits- und einen Einspannbereich aufweisen, wobei der nicht der Wärmebehandlung zu unterziehende Bereich in einer für den Transport der Werkzeuge durch den Ofen vorgesehenen Werkzeugaufnahme während der Wärmebehandlung auf einem ausreichend tiefen Temperaturniveau gehalten ist.

Derartige Öfen zur Wärmebehandlung sind besonders für Bohrer, Reibahlen, Fräser, Gewindeschneider und ähnliche Werkzeuge bekannt. Diese Werkzeuge besitzen einen Einspannbereich, mit dem sie in den Werkzeugmaschinenfuttern befestigt sind, und einen Arbeitsbereich, mit dem die Bearbeitungsvorgänge durchgeführt werden. Die beiden Bereiche müssen unterschiedliche Eigenschaften, insbesondere Festigkeit und Zähigkeit aufweisen. Um eine hohe Standfestigkeit der Werkzeuge zu erzielen, soll nur der Arbeitsbereich der Wärmebehandlung unterzogen werden. Hiezu wurden die Werkzeuge häufig einzeln an Drähten im Einspannbereich aufgehängt und der Arbeitsbereich in ein Salzbad eingetaucht. Der bei einem solchen Verfahren erforderliche Aufwand ist sehr erheblich. Auch wird die Umwelt hiedurch belastet.

Durch Öfen der eingangs genannten Art soll dieser Aufwand vermindertwerden. Bei, z.B. aus der DE 33 20 657 A1, bekannten Öfen wurden die Werkzeuge in eine massive, aus Stahl bestehende Werkzeugaufnahme gesteckt und in einen Vakuumofen eingebracht. Anschließend erfolgt die Evakuierung sowie das Aufheizen des Ofens mit der darin befindlichen Charge. Die aus der Aufnahme herausragenden Arbeitsbereiche der Werkstücke wurden durch die durch Heizelemente abgegebene Wärmestrahlung erwärmt, während der in der Werkzeugaufnahme steckende Teil gegen die Wärmestrahlung abgeschirmt war und zusätzlich gekühlt wurde. Die große Masse der Werkzeugaufnahme bzw. die Kühlung verhinderte dabei, daß der Einspannbereich der Werkzeuge sich auf Temperaturen über 850° C erwärmte. Nachteilig bei diesen bekannten Öfen war insbesondere die sehr lange Auf heiz - und Abkühlzeit.

Es sind auch schon Öfen bekannt geworden, bei denen durch eine besondere Form der Werkzeugaufnahmen bzw. durch eine isolierende Teilung des Ofeninneren die verschiedene Erwärmung der beiden Teile der Werkzeuge angestrebt wird. Jedoch auch bei diesen bekannten Öfen ist einerseits der Arbeitsaufwand erheblich und anderseits dererzielbare Durchsatz zu gering.

Die Erfindung hat es sich daher zum Ziel gesetzt, einen Ofen zur partiellen Wärmebehandlung von Werkzeugen zu schaffen, der bei einem verhältnismäßig einfachen Aufbau eine hohe Durchsatzleistung bzw. kurze Durchlaufzeiten der zu behandelnden Werkzeuge aufweist. Erreicht wird dieses Ziel bei einem Ofen mit den einleitend beschriebenen Merkmalen dadurch, daß zur Wärmebehandlung des Arbeitsbereiches der Werkzeuge eine in sauerstoffarmer Atmosphäre nur den Arbeitsbereich einschließende Induktionsspule angeordnet ist und daß die Werkzeugaufnahme aus einem nicht magnetisierbaren Material besteht. Bei einem erfindungsgemässen Ofen wird daher erstmalig zum Durchhärten des Arbeitsbereiches von Werkzeugen das an sich bekannte Prinzip der induktiven Wärmebehandlung angewandt, wobei der Einspannbereich weich bleibt. Weiters wird durch den Ofen bei Verwendung hochreiner Schutzgase eine hochwertige, blankglänzende Oberfläche erreicht. In einem erfindungsgemäßen Ofen werden durch die Induktion im wesentlichen lediglich die Arbeitsbereiche der Werkzeuge wärmebehandelt, wogegen die in der Werkzeugaufnahme steckenden Einspannbereiche dieser Wärmebehandlung nicht unterzogen werden. Es werden damit auf die einfachste Weise die oben angegebenen, der Erfindung zugrunde liegenden Ziele erreicht.

Bei einer besonders zweckmäßigen Ausführungsform der Erfindung ist die Induktionsspule mehrteilig ausgebildet und die einzelnen Teile sind gegeneinander verstellbar. Dadurch ist es möglich, die Induktionsspule und damit den gesamten Ofen verschiedenen Werkzeuggrößen anzupassen.

Eine solche Anpassung kann insbesondere mit einer Induktionsspule durchgeführt werden, die aus zwei beidseitig der Bewegungsbahn der Werkzeuge angeordneten Spulenhälften besteht, die quer zur Bewegungsrichtung der Werkzeuge beweg- und feststellbar sind. Damit kann der Abstand der beiden Spulenhälften voneinander und samit der Durchlaßquerschnitt für die Werkzeuge eingestellt werden.

Um überdies die Induktionsspule auch der Länge des Arbeitsbereiches der Werkzeuge anpassen zu können, ist es vorteilhaft, wenn die Spulenhälften zweiteilig ausgebildet sind, wobei die oberen Teile gegenüberden unteren Teilen der Höhe nach bewegund feststellbar sind.

Ein erfindungsgemäßer Ofen, in dem der gesamte Arbeitsvorgang durchgeführt werden kann, zeichnet sich aus durch einen Aufnahmetisch, eine daran anschließende, durch zwei Schleusenventile abschließbare und mit Schutzgas flutbare Einschleuskammer, eine daran anschließende Heizkammer mit unmittelbar darauffolgenderAbkühlzone, und eine daran anschließende, durch zwei Schleusenventile abschließbare Ausschleuskammer.

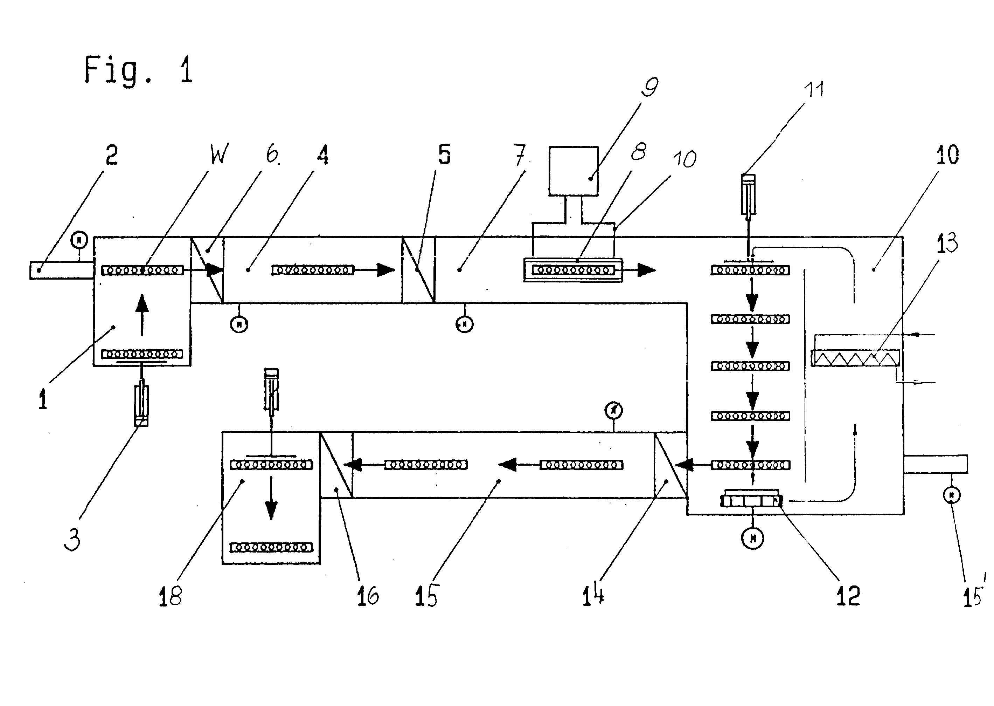

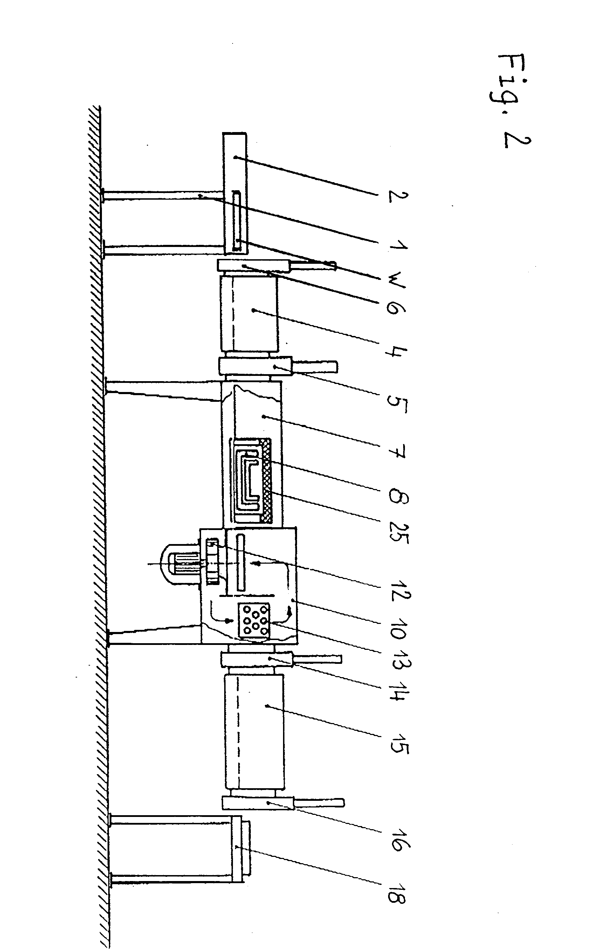

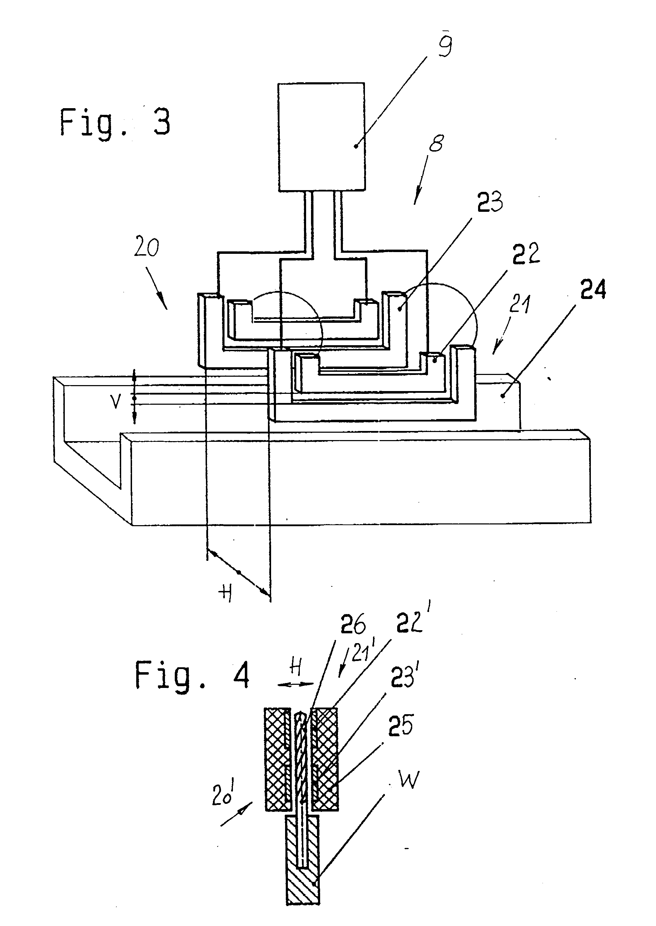

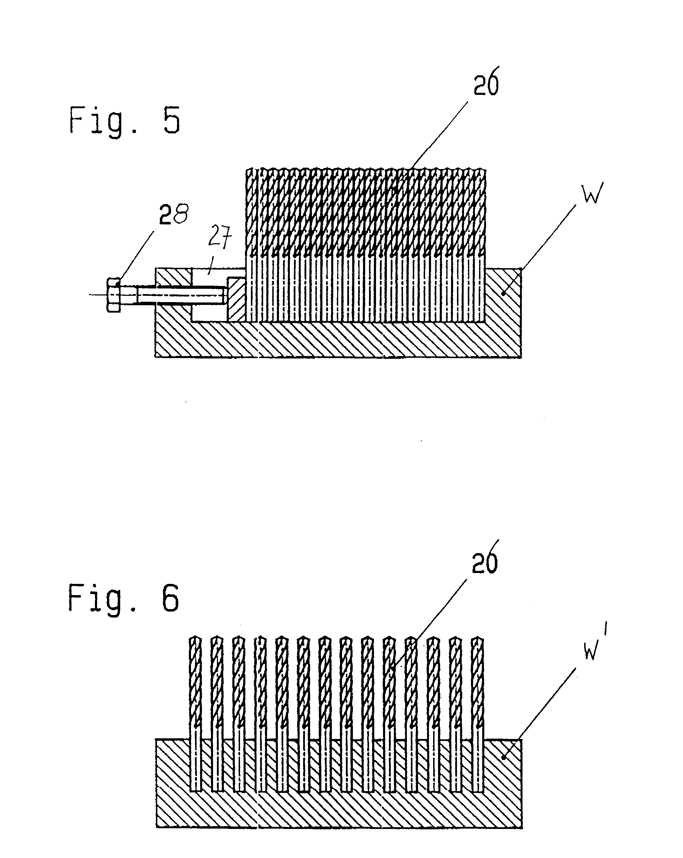

Nachstehend ist die Erfindung anhand von in den Zeichnungen dargestellten Ausführungsbeispielen näher beschrieben. Dabei zeigen: Fig. 1 einen schematischen Grundriß eines erfindungsgemäßen Ofens; Fig. 2 den Aufriß des Ofens nach Fig. 1; Fig. 3 eine perspektivische Darstellung einer in einem Ofen nach der Erfindung verwendeten Induktionsspule; Fig. 4 einen Querschnitt durch eine Induktionsspule mit einem hindurchgeführten Bohrer; Fig. 5 eine Werkzeugaufnahme für Bohrer, wie sie in einem erfindungsgemäßen Ofen verwendet werden kann und Fig. 6 eine andere Ausführungsform einer Werkzeugaufnahme.

Gemäß den Fig. 1 und 2 weist ein erfindungsgemäßer Ofen einen Aufnahmetisch 1 auf, dem ein getakteter Positionierantrieb 3 zugeordnet ist. Es ist ferner eine Einzugsvorrichtung 2 zur Zufuhr von mit Werkzeugen gefüllten Werkzeugaufnahmen W in eine Einschleuskammer 4 angeordnet. Diese Einschleuskammer 4 ist durch zwei Schleusenventile 5 und 6 abschließbar.

Anschließend an das Schleusenventil 6 befindet sich eine Heizkammer 7, in der die Arbeitsbereiche der Werkzeuge durch eine Induktionsspule 8 erhitzt werden. Die Speisung der Induktionsspule 8 erfolgt über einen Frequenzumrichter 9 in Hybridtechnik und eine wassergekühlte Stromschiene 10.

Unmittelbar an die Heizkammer 7 schließt eine Abkühlzone 10 an, in der eine Fördereinrichtung 11, eine Heißgasumwälzeinrichtung 12 und ein Wärmetauscher 13 angeordnet ist. Die Abkühlzone 10 ist durch ein Schleusenventil 14 abschließbar und besitzt zum Ausstoßen der behandelten Werkzeuge samt Werkzeugaufnahmen eine Ausbringeinheit 15. Das Schleusenventil 14 stellt das Eingangsventil für eine Ausschleuskammer 15 dar, deren Ausgang durch ein Schleusenventil 16 abschließbar ist. Ein an das Schleusenventil 16 anschließender, mit einem getakteten Positionierantrieb 17 versehener Ausgabetisch 18 bildet das Ende des erfindungsgemäßen Ofens.

Die Funktion eines erfindungsgemäßen Ofens ist folgende:
Nachdem die mit Werkzeugen gefüllten Werkzeugaufnahmen W auf dem Aufgabetisch 1 abgelegt wurden, erfolgt die Beschickung der Einschleuskammer 4 mit einer Werkzeugaufnahme. Dazu wird zwischen Einschleuskammer 4 und Heizkammer 7 das vakuumdichte Schleusenventil 5 geschlossen und die Einschleuskammer 4 auf Normaldruck entspannt. Nachdem das vakuumdichte Einschleusventil 6 geöffnet wurde, wird eine Werkzeugaufnahme W mittels des kettengetriebenen Taktvorschubes 2 automatisch in die Einschleuskammer 4 eingebracht, das Schleusenventil 6 geschlossen, die Einschleuskammer 4 evakuiert und anschließend mit Schutzgas geflutet.

Das Schleusenventil 5 wird nun geöffnet und die Werkzeugaufnahme wird in die Heizkammer 7 transportiert. Danach wiederholt sich der Einschleusvorgang in die Einschleuskammer 4 für die nächste Werkzeugaufnahme.

In der Heizkammer 7 wird die Werkzeugaufnahme auf einer wassergekühlten Schiene 24 (Fig. 3) geführt, durch die die in der Werkzeugaufnahme, die aus nicht magnetisierbarem Material, z.B. Messing, besteht, befindlichen Einspannbereiche der Werkzeuge gekühlt werden. Die aus der Werkzeugaufnahme herausragenden Arbeitsbereiche der Werkzeuge werden durch die Induktionsspule 9 erhitzt. Aufheizzeiten von 40 bis 60 Sek. ermöglichen eine gleichmäßige Durchwärmung derArbeitsbereiche, wobei Wärmespannungen gering gehalten werden.

Die Regelung der HF-Leistung erfolgt mittels eines Strahlungspyrometers, das die Temperatur der Arbeitsbereiche beim Austritt aus der Induktionsspule mißt.

Die Werkzeugaufnahme mit den erwärmten Werkzeugen wird aus der Heizkammer direkt in die Abkühlzone gefahren, die als wassergekühlte Durchstoßkammer mit mehreren Plätzen für die Werkzeugaufnahmen ausgeführt ist. Die Werkzeugaufnahmen werden dabei von der jeweils nachfolgenden Werkzeugaufnahme weiter geschoben. Die forcierte Gasabschreckung in der Abkühlzone 10 erfolgt mit Schutzgas, das mittels des Heißgasventilators 12 über den wassergekühlten Rippenrohrwärmetauscher 13 rückgekühlt wird.

Aus der Abkühizone 10 gelangen die Werkzeugaufnahmen in die Ausschleuskammer 15. Dazu wird das vakuumdichte Schleusenventil 14 geöffnet und die Werkzeugaufnahme mittels des kettengetriebenen Taktvorschubes 15' in die Ausschleuskammer 15 geschoben. Das Schleusenventil 14 schließt, die Ausschleuskammer 15 wird entspannt, das Schleusenventil 16 geöffnet und die Werkzeugaufnahme auf den Ausgabetisch 18 ausgebracht. Anschließend wird das Schleusenventil 16 wieder geschlossen, die Ausschleuskammer 15 evakuiert und mit Schutzgas geflutet.

In Fig. 3 ist schematisch der mögliche Aufbau einer Induktionsspule 8 dargestellt. Diese besteht im gezeichneten Ausführungsbeispiel aus z7wei beidseitig der Bewegungsbahn der Werkzeuge angeordneten Spulenhälften 20 und 21, die ihrerseits je aus zwei Teilen 22 und 23 bestehen. Die Bewegungsbahn der Werkzeuge wird dabei von einer wassergekühlten Transportschiene 24 für die Werkzeugaufnahmen W gebildet.

Wie durch die Doppelpfeile H und V angedeutet ist, sind einerseits die beiden Spulenhälften 20 und 21 quer zur Bewegungsrichtung der Werkzeuge und anderseits die beiden Teile 22 und 23 der Höhe nach verstellbar. Dadurch ist es möglich, die Induktionsspule 8 in ihrer Gesamtheit den jeweiligen Abmessungen der zu behandelnden Werkzeuge anzupassen.

In Fig.4 ist ein Schnitt durch eine Induktionsspule dargestellt, bei der die Teile 22' und 23' in einer Isolierung 25 eingebettet sind. Bei diesem Ausführungsbeispiel sind nur die beiden Spulenhälften 20' und 21' in horizontaler Richtung H verstellbar. Im gezeichneten Beispiel ist ein Bohrer 26 als zu behandelndes Werkzeug dargestellt.

Beim Ausführungsbeispiel nach Fig. 5 ist die Werkzeugaufnahme W für die Bohrer 26 mit einem Langloch 27 versehen, in das die Bohrer 26 eng aneinanderliegend eingesteckt werden. Eine Schraube 28 bewirkt im Zusammenhang mit einem Druckstück 29 die Halterung der Bohrer 26.

Beim Ausführungsbeispiel nach Fig. 6 ist die Werkzeughalterung W' mit einzelnen Bohrungen versehen, in die der Einspannbereich der Bohrer 26 oder sonstiger Werkzeuge gesteckt wird. Im Rahmen der Erfindung sind zahlreiche Abänderungen möglich. So könnte die Induktionsspule auch rund ausgeführt sein, wobei die Zuführung der Werkzeuge entsprechend angepaßt werden müßte. Auch der Positionierantrieb bzw. auch die anderen Antriebe könnten statt getaktet kontinuierlich arbeiten.

## Patentansprüche

1. Ofen zur partiellen Wärmebehandlung von Werkzeugen (26), die einen Arbeits- und einen Einspannbereich aufweisen, wobei der nicht der Wärmebehandlung zu unterziehende Bereich in einer für den Transport der Werkzeuge durch den Ofen vorgesehenen Werkzeugaufnahme (W) während der Wärmebehandlung auf einem ausreichend tiefen Temperaturniveau gehalten ist, dadurch gekennzeichnet, daß zur Wärmebehandlung des Arbeitsbereiches der Werkzeuge (26) eine in sauerstoffarmer Atmosphäre nur den Arbeitsbereich einschließende Induktionsspule (8) angeordnet ist und daß die Werkzeugaufnahme (W) aus einem nicht magnetisierbaren Material besteht.

2. Ofen nach Anspruch 1, dadurch gekennzeichnet, daß die Induktionsspule (8) mehrteilig ausgebildet ist und die einzelnen Teile (20,21; 22, 23) gegeneinander verstellbar sind (Fig. 3)..

3. Ofen nach Anspruch 2, dadurch gekennzeichnet, daß die Induktionsspule (8) aus zwei beidseitig der Bewegungsbahn derWerkzeuge angeordneten Spulenhälften (20, 21) besteht, die querzur Bewegungsrichtung der Werkzeuge beweg- und feststellbar sind (Fig.3).

4. Ofen nach Anspruch 2 oder 3, dadurch gekennzeichnet, daß die Spulen hälften (21,22) zweiteilig ausgebildet sind, wobei die oberen Teile (22) gegenüber den Unterteilen (23) der Höhe nach beweg- und feststellbar sind (Fig. 3).

5. Ofen nach einem derAnsprüche 1 bis 4, gekennzeichnet durch einen Aufnahmetisch (1), eine daran anschließende, durch zwei Schleusenventile (5, 6) abschließbare, evakuierbare und mit Schutzgas flutbare Einschleuskammer (4), eine daran anschließende Heizkammer (7) mit unmit- telbardarauffolgenderAbkühlzone (10), und eine daran anschließende, durch zwei Schleusenventile (14, 16) abschließbare Ausschleuskammer (15) (Fig. 1,2).
